# EUROPEAN PATENT SPECIFICATION

(11) **EP 0 332 727 B1**
(45) Date of publication and mention of the grant of the patent: **01.06.1994**
(21) Application number: 88104240.2
(22) Date of filing: 17.03.1988
(51) Int. Cl.: G05B 19/04

(54) **Apparatus for testing an electronic control system**
Gerät zum Testen eines elektronischen Steuersystems
Appareil pour tester un système de commande électronique

(43) Date of publication of application: 20.09.1989
(73) Proprietor: ROBERT BOSCH GMBH, 70442 Stuttgart (DE)
(72) Inventor: Sieber, Albrecht, Dipl.-Ing., D-7140 Ludwigsburg (DE); Hassler, Albin, Ing., D-7981 Fronhofen (DE); Nusser, Claus-Dieter, Ing., D-7141 Schwieberdingen (DE)

(56) References cited:
- DE-A- 2 532 455
- FR-A- 2 444 742
- FR-A- 2 522 424
- GB-A- 2 125 578

## Description

The present invention relates to apparatus adapted for testing an electronic control system which utilizes a microprocessor.

In modern vehicles, many functions are controlled by electronic control system which utilizes an electronic control unit incorporating a microprocessor. One example of such control system is the electronic control of injection in a fuel injection internal combustion engine. It is necessary to be able to test the electronic control system or a part thereof both at final test stage after production and afterwards during routine maintenance of the vehicle or should a fault occur.

Testing of an electronic control device has up to now been achieved in one of two ways, namely by a section of the control unit used in system being specifically assigned to a test program to which the microprocessor can be switched or by attaching external test equipment.

The assignment of specific portions of the control unit for test purposes is not always satisfactory since the test routines are difficult to change once set. The use of external test equipment has, up to now, required a large amount of external equipment including special sensors for engine parameters such as throttle setting and engine speed as well as actuators for generating the test conditions for application to the inputs of a control equipment. While the use of external test equipment allows a great deal of flexibility in the test procedure, it is expensive. Further, it takes a considerable amount of time to carry out the tests using the external test equipment.

Electronic control units for vehicles are usually provided with a replaceable data module which tailors a standard control unit for use on a specific engine. The data module may be in the form of a ROM or EPROM which the processor of the control unit accesses during normal operation.

From the FR-A-2 444 742 it is known a control unit for the control of a washing machine. This control unit contains a microprocessor. The memory of the microprocessor contains a test program. The testing of the control unit is started, in that a button is pressed by an operator. The signal of the button is fed to the microprocessor, which starts its test program thereafter. During the testing, the microprocessor executes a self-test. The microprocessor checks peripheral components as displays, signal lamps, switches and regulators. After every test step, the microprocessor controls the signal lamps and signalises to the operator if the test step has been fulfilled or not.

The DE-A-25 32 455 relates to a method for error detection in a programmable circuit. For test purposes, there are test instructions which are stored in an instruction memory. During the test, every test step starts at a first state and ends in a final state. The final state is compared with a predetermined final state. If there are differences between the final state and the predetermined final state an error detection is made which can be displayed. For the test of an input/output unit an input is short-circuited with an output of the input/output unit. To the output of the input/output unit a predetermined binary signal level is fed, which is afterwards interrogated at the input of the input/output unit.

From the GB-A-2 125 578 a self-monitoring system for an automotive electronic control system is known. To detect faulty segments, the self-monitoring system checks inputs and outputs of the electronic control system. The results of the check operation are conducted to a non-volatile memory which is associated with the electronic control system. The self-monitoring system is associated with another automotive microcomputer which includes a display unit. The check operation results are also fed to the microcomputer which controls the display unit in response to a display request manually inputted from a manual unit.

The present invention has the advantage, that for testing an electronic control unit the inputs of the input interface are connected to the outputs of the output interface. During the test, the output interface is used to stimulate the input circuits of the electronic control unit. In analysing the signals (e.g. frequency, phase differencies, etc.) which are interrogated at the inputs in comparison to the signals which are outputted via the output interface, detailed test results are produced. Therefore, there is no need for further sophisticated testing equipment like gauges and means for generating the test conditions. Another advantage of the present invention is the fact that the connector device which connects together the input and output interface is arranged to connect the data interface to the test result monitoring device. Therefore, no further means are necessary to connect the data interface to the test result monitoring device.

In order that the present invention be more readily understood, an embodiment thereof will now be described by way of example with reference to the accompanying drawings, in which:
Figure 1 shows a block diagram of an existing electronic control unit; and
Figure 2 shows a diagrammatic representation of the embodiment of the present invention.

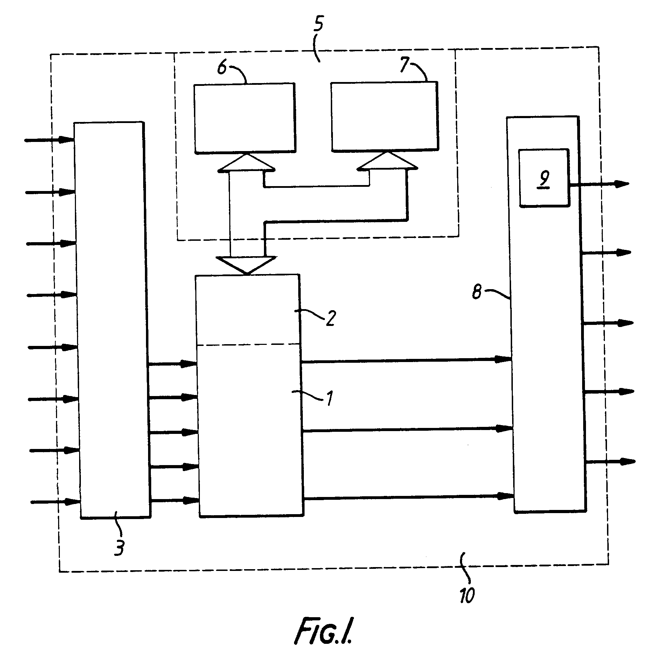

Before describing the present invention, it is considered helpful if a description of a electronic control unit for the engine of a motor vehicle is given with reference to Figure 1.

The control unit 10 shown in Figure 1 is represented in broken lines and comprises a control processing unit 1 with associated system memory 2 in the form of ROM, EPROM and/or RAM. The CPU 1 is connected to an input interface 3 which is arranged to receive measured value inputs from the engine or associated sensors (not shown). The CPU 1 performs certain operations on the measured value inputs in accordance with its system memory modified as necessary by a replaceable operations software module 5 which is used to customise the CPU to operate with a particular type of engine. As shown, the software module 5 comprises a data memory 6 and a coding memory 7. The results of the operation carried out by the CPU 1 are fed to an output interface circuit which provides control signals to apparatus, such as fuel injections, equipment being controlled by the control unit. The output interface circuit includes a data interface 9 e.g. RS 422 serial interface. Although shown in Figure 1 as being on opposite sides of the control unit requiring separate input and output connections, it is more usual to have the inputs and outputs together so that a single connector can be used.

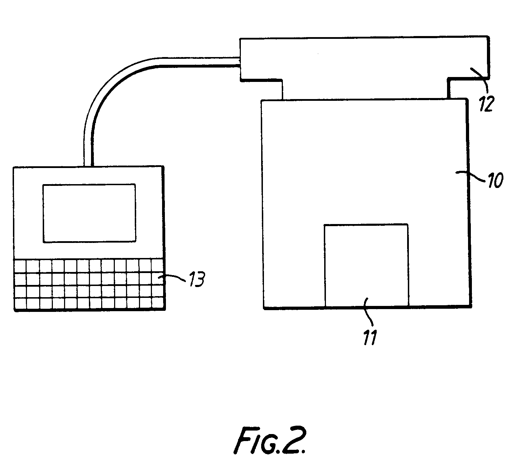

Referring now to Figure 2, this shows the control unit 10 connected to test apparatus according to the present invention. Two major modifications are made for testing purposes. The first is that the software module 5 is removed and replaced by a test data module 11 for causing the CPU 1 of the control unit 10 to operate in a test mode. The second is that a special connector 12 is connected to the output interface 8. The connector 12 is a short circuit plug for connecting together inputs and outputs of the control unit in a predetermined manner. The test data module 11 causes the CPU 1 to apply predetermined signals to each of the outputs in turn and to interrogate the corresponding inputs. The result of the interrogation is then fed to the data interface 9. The connector 12 also provides connection to the serial data interface 9 of the control unit so that the results of the tests which are fed from the CPU 1 to the serial interface 9 can be output to test result monitoring device in the form of a terminal 13.

Whilst the module 11 causes the CPU to operate in test mode, software containing other rest information may be integrated in the internal memory 2 of the control unit.

The terminal 13 can take one of a number of different forms as long as it is capable of receiving serial data e.g. it may be a P.C. unit or it may be a standard terminal giving a visual and/or printed read out of the test results. Alternatively, the terminal 13 could be much more simple giving only an audible or visual indication by means of a buzzer or lamp whether or not a test procedure had produced a correct result or a result within limits.

Although not the most convenient, it is possible to modify the above arrangement by having the test data, previously contained in the replaceable module 11, stored in on-board ROM.

Experience has shown that the simple method of connecting inputs and outputs of the control unit is sometimes not sufficient for the test of the complete control unit. In these circumstances it is useful to have one or more special function generators for stimulating the inputs. The function generator or generators can be used additionally to the change in ROM and correction of inputs and outputs or as an alternative for certain tests. Computing results of the microcomputer can then be read via the serial line of the terminal. This method combines the advantage of having very little test equipment with the good test results of the conventional test method.

Another application of the test by changing the ROM-Module is the test of the injection equipment (i.e. the injection pump of a diesel engine). This is achieved by changing the ROM-Module to a special Pump-Test-ROM-Module; the closed loop control of the pump is forced thereby to increase and decrease the injection quantity for a fixed period of time. Via closed loop, the control unit measures if the pump is able to follow the commanded fuel quantity. If the time delay between the commanded and the actual fuel quantity is too large the operator is recommended to change the pump equipment.

## Claims

1. Apparatus adapted for testing a part of an electronic control system (10) having a microprocessor (1), an input interface (3) for applying inputs to the microprocessor (1), an output interface (8) for receiving the results of processing carried out by the microprocessor (1), a software store (11) which contains test information and which is connectable to the microprocessor (1), the apparatus comprising a test result monitoring device (13) which is connected to the control system (10) via a data interface (9), especially a serial data interface, the data interface (9) being a part of the output interface (8), characterized in that a connector device (12) is arranged to connect together inputs of the input interface (3) and outputs of the output interface (8) in a predetermined manner and to connect the data interface (9) to the test result monitoring device (13) and that the test information causes the microprocessor (1) to apply predetermined signals to the outputs in turn and to interrogate the corresponding inputs and to output the results of the interrogation to the test result monitoring device (13).

2. Apparatus according to claim 1, wherein the software store (11) is in the form of a module adapted to replace the software module (5) in the control device (10).

3. Apparatus according to claim 1 or 2, wherein the result monitoring device is a computer.

4. Apparatus according to claim 1 or 2, wherein the result monitoring device comprises means for providing a visual indication of the results of the tests.

5. Apparatus according to claim 1, wherein the software which contains test information is integrated in the internal memory (2) of the control unit.

6. Apparatus according to claim 1, wherein there is at least one function generator connected to the control device (10).

7. Apparatus according to claim 1, wherein the injection system (i.e. injection pump) is connected to the control device and the test software is used for testing the closed loop control of the injection pump.

## Patentansprüche

1. Ein Apparat, der für die Prüfung eines Teils eines elektronischen Steuersystems (10) angepaßt ist, das über einen Mikroprozessor (1), eine Eingangsschnittstelle (3) für das Anlegen der Eingänge zum Mikroprozessor (1), eine Ausgangsschnittstelle (8) für das Empfangen der Ergebnisse der vom Mikroprozessor (1) ausgeführten Verarbeitung und einen Software-Speicher (11), der die Prüfdaten enthält und der an den Mikroprozessor (1) angeschlossen werden kann, verfügt, wobei der Apparat ein Prüfergebnis-Überwachungsgerät (13) umfaßt, das über eine Datenschnittstelle (9), insbesondere eine serielle Datenschnittstelle, mit dem Steuersystem (10) verbunden ist und wobei die Datenschnittstelle (9) Bestandteil der Ausgangsschnittstelle (8) ist, dadurch gekennzeichnet, daß eine Verbindungseinrichtung (12) vorgesehen ist, mit der die Eingänge der Eingangsschnittstelle (3) und die Ausgänge der Ausgangsschnittstelle (8) aufvorbestimmte Weise und die Datenschnittstelle (9) mit dem Prüfergebnis-Überwachungsgerät (13) verbunden werden und daß die Prüfdaten den Mikroprozessor (1) dazu veranlassen, nacheinander vorbestimmte Signale an den Ausgängen anzulegen, die zugehörigen Eingänge abzufragen und die Ergebnisse der Abfrage an das Prüfergebnis-Überwachungsgerät (13) auszugeben.

2. Ein Apparat nach Anspruch 1, wobei es sich bei dem Softwarespeicher (11) um ein Modul handelt, das so angepaßt ist, daß es das Software-Modul (5) im Steuergerät (10) ersetzt.

3. Ein Apparat nach Anspruch 1 oder 2, wobei es sich bei dem Ergebnis-Überwachungsgerät um einen Computer handelt.

4. Ein Apparat nach Anspruch 1 oder 2, bei dem das Ergebnis-Überwachungsgerät Einrichtungen für eine visuelle Anzeige der Prüfergebnisse umfaßt.

5. Ein Apparat nach Anspruch 1, bei dem die Software, die die Prüfdaten enthält, in den internen Speicher (2) des Steuergeräts integriert ist.

6. Ein Apparat nach Anspruch 1, bei dem mindestens ein Funktionsgenerator an das Steuergerät (10) angeschlossen ist.

7. Ein Apparat nach Anspruch 1, bei dem das Einspritzsystem (d.h. die Einspritzpumpe) mit dem Steuergerät verbunden ist und bei dem die Prüfsoftware für die Prüfung der Regelung mit geschlossenem Regelkreis der Einspritzpumpe verwendet wird.

## Revendications

1. Appareil conçu pour tester une partie d'un système de commande électronique (10), comportant un microprocesseur (1), une interface d'entrée (3) pour appliquer des signaux d'entrée au microprocesseur (1), une interface de sortie (8) pour recevoir les résultats du traitement effectué par le microprocesseur (1), une mémoire de logiciel (1) contenant l'information de test et pouvant être branchée au microprocesseur (1), l'appareil comprenant un dispositif de surveillance de résultats de test (13) branché au système de commande (10) par l'intermédiaire d'une interface de données (9) telle qu'en particulier une interface de données série, cette interface de données (9) faisant partie de l'interface de sortie (8), caractérisé en ce qu'un dispositif de connecteur (12) est monté pour connecter ensemble les entrées de l'interface d'entrée (3), et les sorties de l'interface de sortie (8) dans une disposition prédéterminée et pour connecter l'interface de données (9) au dispositif de surveillance de résultats de test (13), et en ce que l'information de test amène le microprocesseur (1) à appliquer des signaux prédéterminés tout à tour aux sorties et à interroger les entrées correspondantes pour fournir en sortie les résultats de l'interrogation au dispositif de surveillance de résultats de test (13).

2. Appareil selon la revendication 1, caractérisé en ce que la mémoire de logiciel (11) se présente sous la forme d'un module conçu pour remplacer le module de logiciel (5) dans le dispositif de commande (10).

3. Appareil selon l'une des revendications 1 ou 2, caractérisé en ce que le dispositif de surveillance de résultats est un ordinateur.

4. Appareil selon l'une des revendications 1 ou 2, caractérisé en ce que le dispositif de surveillance de résultats comprend des moyens pour fournir une indication visuelle du résultats des tests.

5. Appareil selon la revendication 1, caractérisé en ce que le logiciel qui contient l'information de test est intégré dans la mémoire interne (2) de l'unité de commande.

6. Appareil selon la revendication 1, caractérisé en ce qu'il comprend au moins un générateur de fonction connecté au dispositif de commande (10).

7. Appareil selon la revendication 1, caractérisé en ce que le système d'injection (c'est-à-dire une pompe d'injection) est connecté au dispositif de commande, et en ce que le logiciel de test est utilisé pour tester la commande en boucle fermée de la pompe d'injection.
